# EUROPÄISCHE PATENTANMELDUNG

(11) **EP 1 908 666 A2**
(43) Veröffentlichungstag der Anmeldung: **09.04.2008**
(21) Anmeldenummer: 07117911.3
(22) Anmeldetag: 04.10.2007
(51) Int. Cl.: B62D 15/02

(54) **Verfahren zur Unterstützung des Fahrers eines Kraftfahrzeuges bei einem Einparkvorgang**

(30) Priorität: 07.10.2006 DE 102006047461
(71) Anmelder: Hella KGaA Hueck & Co., 59552 Lippstadt (DE)
(72) Erfinder: Ottenhues, Thomas, 48477 Hörstel (DE); Heinig, Sven, 59558 Lippstadt (DE)

(57) **Zusammenfassung**

Es wird ein Verfahren zur Unterstützung des Fahrers eines Kraftfahrzeuges bei einem Einparkvorgang beschrieben, wobei ein erster Einparkzug unter Berücksichtigung einer vorherberechneten Einparksollbahn erfolgt und weitere Korrekturzüge in Abhängigkeit vom Gierwinkel jeweils mit einem Lenkwinkelvolleinschlag gestartet werden.

## Beschreibung

Die Erfindung bezieht sich auf ein Verfahren zur Unterstützung des Fahrers eines Kraftfahrzeuges bei einem Einparkvorgang in Längsparklücken. Ein derartiges Verfahren ist beispielsweise aus der DE 10 2004 001 428 A1 bekannt. Dabei wird zunächst über eine am Fahrzeug angeordnete Sensorik (z.B. Ultraschallabstandsensor) eine aufgefundene Parklücke hinsichtlich ihrer charakteristischen Daten (Länge, Breite) vermessen. Anschließend wird in einem nächsten Schritt anhand der ermittelten Parklückendaten und anhand von Kraftfahrzeugdaten entschieden, ob die Parklücke für das Kraftfahrzeug zum Einparken geeignet ist. Danach wird anhand eines Bahnplanungsalgorithmus eine einzügige Einparksollbahn berechnet. Dabei bedeutet einzügig, dass die Sollbahn ohne einen Fahrtrichtungswechsel (Vor-/Zurück-Richtungsviechsel) zu durchfahren ist.

Es sind sogenannte Einparkassistenzsysteme bekannt, bei denen die Lenkung während des Einparkvorganges über eine Lenkaktuatorik vollkommen autonom vorgenommen wird, so dass das Kraftfahrzeug entlang der Einparksollbahn geführt wird. Der Fahrer kann dabei lediglich die Fahrgeschwindigkeit vorgeben und Bremsen/Anhalten. Es sind jedoch auch Eihparkassistanzsysteme bekannt, bei denen für den Fahrer lediglich akustische, optische oder haptische. Einparkunterstützungsinformationen erzeugt werden, um das Kraftfahrzeug entlang der Einparksollbahn zu führen, wobei der Fahrer die Lenkung jedoch anhand dieser Informationen selbst vornimmt.

Bei derartigen Einparkassistenzsystemen können folgende Probleme auftreten:
a) Auch beim Einparken mit einem Einparkassistenzsystem hat der Fahrer selbstverständlich aus Sicherheitsgründen jederzeit während des Einparkvorganges die Möglichkeit, das Kraftfahrzeug anzuhalten. Dabei ist das diesbezügliche Verhalten der Fahrer sehr unterschiedlich. Insbesondere übervorsichtige Fahrer neigen dazu, das Kraftfahrzeug aufgrund eines die Parklücke begrenzenden Hindernisses (z.B. ein die Parklücke begrenzendes parkendes Kraftfahrzeug) zu früh anzuhalten. Ein zu frühes Anhalten des Fahrzeuges während des Einparkvorganges führt jedoch dazu, dass das Kraftfahrzeug schräg in der Längsparklücke steht,
b) Bei einer zu hohen Fahrgeschwindigkeit beim Einparkvorgang kann es aufgrund der beschränkten Geschwindigkeit der Lenkaktuatorik zu einem nicht mehr korrigierbaren Abweichen von der Einparksollbahn kommen, was dazu führt, dass das Kraftfahrzeug schräg und zu tief in der Parklücke steht.
c) Eine fehlerhafte oder ungenaue Vermessung der Parklücke kann den Fahrzeugführer dazu zwingen, das Kraftfahrzeug anzuhalten bevor die Endposition der Einparksollbahn erreicht wurde. Auch in diesem Fall steht das Kraftfahrzeug schräg in der Parklücke.

Aufgabe der Erfindung ist es, ein Verfahren zur Unterstützung des Fahrers bei einem Einparkvorgang mit einem Einparkassistenzsystem zu schaffen, das auch beim Auftreten eines der oben genannten Probleme in einfacher Weise das Erreichen einer einwandfreien Parkposition ermöglicht,

Diese Aufgabe wird durch die Merkmale des Anspruches 1 gelöst.

Erfindungsgemäß wird beim Stopp/Abbruch des ersten Einparkzuges, der unter Berücksichtigung der berechneten Einparksollbahn durchgeführt wird, die Position, ins-Anmelderin : Hella KGaA Hueck & Co. besondere die Ausrichtung, des Kraftfahrzeuges in der Parklücke überprüft. Falls festgestellt wird, dass das Kraftfahrzeug schräg in der Parklücke steht, wird nicht in aufwendiger Weise versucht, das Kraftfahrzeug in ein- oder mehrzügigen Rangiermanövem anhand einer neu berechneten Einparksollbahn zu führen, Erfindungsgemäß erfolgt der nächste Einparkzug mit maximalem Lenkwinkeleinschlag, wobei die Richtung (rechts oder links) des Lankwinkeleinschlags von der gewählten Fahrtrichtung-(vorwärts oder rückwärts) abhängt.

Für die Überprüfung der Ausrichtung des Kraftfahrzeuges beim Stopp/Abbruch eines Einparkzuges eignet sich besonders der Gierwinkel des Kraftfahrzeuges. Dabei wird unter Gierwinkel der Winkel zwischen der Fahrzeuglängsachse und der Längsrichtung der Parklücke verstanden. Der so definierte Gierwinkel wird anhand der Parklückendanten, des zurückgelegten Weges und der korrespondierenden Lenkwinkelsignale sowie anhand von modellbasierten Fahrzeugdaten ermittelt.

Das erfindungsgemäße Verfahren ist toleranter gegenüber einem Stopp/Abbruch des Einparkmanövers entsprechend der berechneten Einparksollbahn. Sollte nach dem Stopp/Abbruch eines Einparkzuges ein weitererweitere Einparkzug als Korrekturzug notwendig sein, so ist dieser für den Fahrer in jedem Fall transparent und nachvollziehbar, da dieser immer mit maximalem Lankeinschlag gestartet wird. Auf diese Weise werden Irritationen des Fahrers vermieden und das Vertrauen in das Einparkassistenzsystem erhöht.

Der Fahrer kann selbst individuell nach seinem Fahrverhalten einen Einparkzug stoppen, ohne dass das Kraftfahrzeug ohne jede weitere Unterstützung schräg in der Parklücke stehen bleibt und ohne dass möglicherweise irritierende weitere Einparkzüge entsprechend einer neu berechneten Einparksollbahn, für die er unter Umständen erst eine neue Ausgangsposition anfahren müsste, erfolgen.

Anhand der beigefügten Zeichnungen wird die Erfindung nachfolgend näher erläufert. Dabei zeigt:
- Fig. 1: die Ausgangssituation nach dem Auffinden der Parklücke,
- Fig. 2: ein schräg in der Parklücke stehendes Fahrzeug nach dem Stopp eines Einparkzuges,
- Fig. 3: ein Ablaufdiagramm des erfindungsgemäßen Verfahrens.

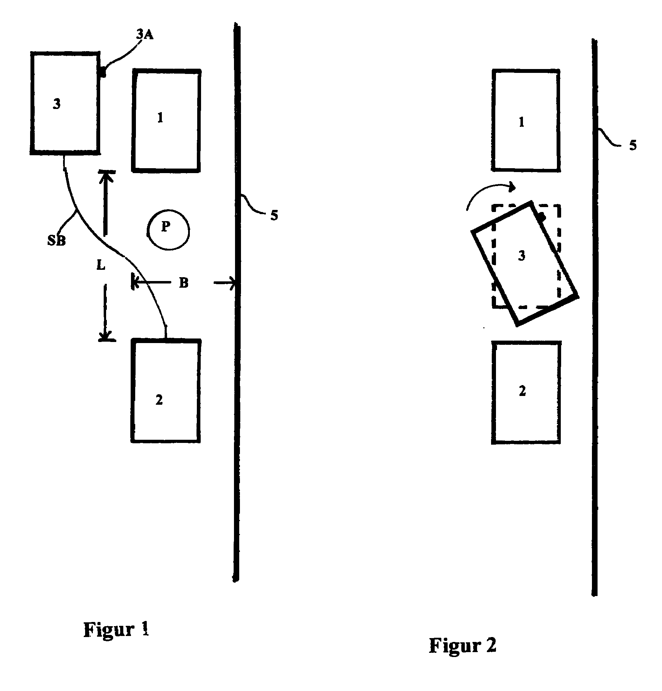

Figur 1 stellt die Ausgangssituation nach dem Auffinden der Parklücke dar. Die Parklücke (P) wird im dargestellten Fall durch zwei parkende Kraftfahrzeuge (1,2) begrenzt. Zur Vermessung der Parklücke (insbesondere Breite B und Länge L) weist das einzuparkende Kraftfahrzeug (3) mindestens einen seitlichen Abstandssensor (3A), insbesondere Ultraschallsensor, auf.
Nachdem die Parklücke (P) vermessen wurde, wird von einem Steuergerät des in dem Kraftfahrzeug implementierten Einparkassistenzsystems entschieden, ob die Parklücke (P) für das Kraftfahrzeug (3) zum Einparken geeignet ist. Dafür werden die Daten (B, L) der Parklücke (P) sowie die Daten des Kraftfahrzeuges herangezogen. Falls die Parklücke (P) geeignet ist, wird anhand eines Bahnplanungsalgorithmus eine Einparksollbahn (SB) berechnet. Die in Figur schematisch eingezeichnet ist. Anschließend wird ein erster Einparkzug unter Berücksichtigung der berechneten Einparksollbahn (SB) gestartet.

Wird dieser Einparkzug gleich aus welchem Grunde gestoppt bzw. abgebrochen, so erfolgt nun erfindungsgemäß eine Überprüfung des Krafffahrzeug-Gierwinkels. Im Idealfall beträgt der Gierwinkel bei Beendigung des Einparkvorganges Nullgrad. Dann steht das Kraftfahrzeug gerade, d.h. in Längsrichtung der Parklücke (P) und bspw. parallel zum Bordstein (5). Ein von Null verschiedener Gierwinkel bedeutet, jedoch dass das Kraftfahrzeug nicht in Längsrichtung zur Parklücke ausgerichtet ist, sonderen schräg dazu. Bei der Überprüfung des Gierwinkels wird festgestellt ob der Gier-winkel kleiner als ein vorgegebener Grenzwert ist. Dabei kann der Grenzwert nahe bei Nullgrad liegen.

Ergibt die Überprüfung, dass der Gierwinkel kleiner als der Grenzwert ist, so ist der Einparkvorgang erfolgreich beendet. Anderenfalls wird erfindungsgemäß ein weiterer Einparkzug gestartet Dieser weitere Einparkzug (Korrekturzug) erfolgt nun mit maximalem Lenkwinkeleinschlag, wobei die Richtung (rechts oder links) des Lenkwinkeleinschlags von der Fahrtrichtung (vorwärts oder rückwärts) für diesen Einparkzug abhängt. Im dargestellten Beispiel erfolgt der erste Einparkzug, der unter Berücksichtigung der Einparksollbahn durchgeführt wird, beim Rückwärtsfahren. Nach dem Stopp/Abbruch dieses ersten Einparkzuges erfolgt nun bei Schrägstellung (siehe Figur 2) des Kraftfahrzeuges der Korrekturzug bei maximalem Rechtslenkwinkeleinschlag und Vorwärtsfahrt. Bei Abbruch dieses Korrekturzuges würde - falls erforderlich - ein zweiter Korrekturzug bei maximalem Linkslenkwinkeleinschlag und Rückwärtsfahrt erfolgen, Dies Verfahren kann ggf, iterativ fortgesetzt, werden.

Beim Stopp/Abbruch eines Einparkzuges wird das Kraftfahrzeug angehalten, wobei ein Signal erzeugt wird, woraufhin die Überprüfung des Gierwinkels und ggf. der Start eines Korrekturzuges eingeleitet wird. Das Signal kann bei Betätigung des Gangwahlschalters automatisch erzeugt werden, d.h. immer dann wenn der Fahrer beim Stopp/Abbruch eines Einparkzuges in eine Neutralstellung schaltet oder die Fahrtrichtung wechselt (Rückwärtsgang -> Vorwärtsgang oder vice versa). Alternativ oder zusätzlich kann das Signal auch über Abstandssensoren (nicht dargestellt) erzeugt werden, die an der Front- und/oder Heckseite des Kraftfahrzeuges angeordnet sind, und den Abstand zu Hindernissen nach vorne bzw. hinten messen.

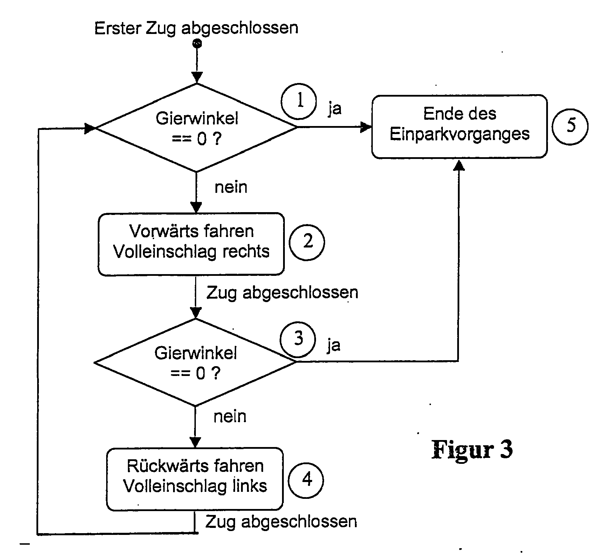

In Figur 3 wird das erfindungsgemäße Verfahren in einem Ablaufdiagramm veranschaulicht.

## Patentansprüche

1. Verfahren zur Unterstützung des Fahrers eines Kraftfahrzeuges bei einem Einparkvorgang in Längsparklücken mit den folgenden Schritten:
a) sensorisches Vermessen einer aufgefundenen Parklücke,
b) Entscheidung anhand der in Schritt a) ermittelten Vermessungsdaten und anhand der Kraftfahrzeugdaten, ob die Parklücke für das Kraftfahrzeug zum Einparken geeignet ist,
c) Berechung einer Einparksollbahn anhand eines Bahnplanungsalgorithmus,
d) Start eines Einparkzuges unter Berücksichtigung der Einparksollbahn, **gekennzeichnet durch** die weiteren Schritte:
e) Überprüfung des Kraftfahrzeug-Gierwinkels beim Stopp des Einparkzuges,
f) Beendigung des Einparkvorgangs, wenn der Gierwinkel kleiner als ein vorgegebener Grenzwert ist,
g) Start eines weiteren Einparkzuges in einer vorbestimmten Fahrtrichtung (vorwärts oder rückwärts) mit maximalem Lenkwinkeleinschlag nach rechts oder links, wenn der Gierwinkel größer als der vorgegebene Grenzwert ist,
h) erneute Überprüfung des Gierwinkels beim Stopp des weiteren Einparkzuges,
i) Beendigung des Einparkvorgangs, wenn der Gierwinkel kleiner als der vorgegebene Grenzwert ist,
j) Start eines weiteren Einparkzuges, wenn der Gierwinkel kleiner als der vorgegebene Grenzwert ist, wobei die Fahrtrichtung (vorwärts oder rückwärts) und die Richtung (rechts oder links) des maximalen Lenkwinkeleinschlags bei diesem Einparkzug entgegengesetzt zu dem Einparkzug in Schritt g) ist,
k) erneute Überprüfung des Gierwinkels beim Stopp des weiteren Einparkzuges,
l) Beendigung des Einparkvorgangs, wenn der Gierwinkel kleiner als der vorgegebene Grenzwert ist,
m) Wiederholung der Schritte ab g), wenn der Gierwinkel größer als der vorgegebene Grenzwert ist.

2. Verfahren nach Anspruch 1,
**dadurch gekennzeichnet, dass**
beim Stopp eines Einparkzuges ein Signal generiert wird, woraufhin die Überprüfung des Gierwinkels und der oder die weiteren Schritte eingeleitet werden.

3. Verfahren nach Anspruch 2,
**dadurch gekennzeichnet, dass**
das Signal bei Betätigung des Gangschalters erzeugt wird.

4. Verfahren nach Anspruch 2,
**dadurch gekennzeichnet, dass**
das Signal über Abstandssensoren erzeugt wird.

5. Verfahren nach einem der vorstehenden Ansprüche,
**dadurch gekennzeichnet, dass**
der Lenkwinkel nach dem Start eines Einparkzuges gemäß der Schritte g) oder j) ausgehend vom maximalen Lenkwinkeleinschlag im Verlauf des Einparkzuges auf Null reduziert wird.
